# EUROPÄISCHE PATENTSCHRIFT

(11) **EP 3 696 363 B1**
(45) Veröffentlichungstag und Bekanntmachung des Hinweises auf die Patenterteilung: **06.07.2022**
(21) Anmeldenummer: 20156535.5
(22) Anmeldetag: 11.02.2020
(51) Int. Cl.: E06B 9/17, B23K 20/10, B29C 65/08, E06B 9/174

(54) **VERFAHREN UND VORRICHTUNG ZUR HERSTELLUNG EINES ROLLLADENKASTENS SOWIE ZUSAMMENGESETZTER ROLLLADENKASTEN**
METHOD AND DEVICE FOR PRODUCING A ROLLER SHUTTER BOX AND ASSEMBLED ROLLER SHUTTER BOX
PROCÉDÉ ET DISPOSITIF DE FABRICATION D'UN CAISSON DE VOLET ROULANT AINSI QUE CAISSON DE VOLET ROULANT ASSEMBLÉ

(30) Priorität: 14.02.2019 DE 102019103706; 06.08.2019 DE 102019121182
(43) Veröffentlichungstag der Anmeldung: 19.08.2020
(73) Patentinhaber: EXTE GmbH, 51688 Wipperfürth (DE)
(72) Erfinder:
(74) Vertreter: Müller, Enno

(56) Entgegenhaltungen:
- DE-A1- 4 407 885
- DE-A1- 4 440 778
- DE-B4-102007 025 645

## Beschreibung

### Gebiet der Technik

Die Erfindung betrifft zunächst einen zusammengesetzten Rollladenkasten nach den Merkmalen des Oberbegriffes des Anspruches 1. Die Erfindung betrifft weiter ein Verfahren zur Herstellung eines Rollladenkastens nach den Merkmalen des Oberbegriffes des Anspruches 5.

Die Erfindung betrifft zudem eine Vorrichtung zur Herstellung eines Rollladenkastens nach den Merkmalen des Oberbegriffes des Anspruches 13.

### Stand der Technik

Rollladenkästen der in Rede stehenden Art sind beispielsweise aus der DE 10 2007 025 645 B4 bekannt. Ein derartiger, sich aus mehreren Teilen zusammensetzender Rollladenkasten wird zufolge Ausbildung von Steckverbindungen zusammengefügt und gegebenenfalls abschließend, beispielsweise zufolge einer Verschraubung, verfestigt.

Aus der DE 44 07 885 A1 ist ein Rollenkasten bekannt, bei dessen Herstellung Teile im Ultraschallschweißverfahren miteinander verbunden werden. Hierzu sind an einem Kragen innenseitig Materialauswölbungen vorgesehen, mit denen nach einer Steckzuordnung ein Ultraschallschweißvorgang, gerichtet quer zu einer Längserstreckung des Rollladenkastens, durchgeführt wird. Vergleichbares ist auch aus der DE 44 40 778 A1 bekannt.

### Zusammenfassung der Erfindung

Ausgehend von dem dargelegten Stand der Technik beschäftigt sich die Erfindung mit der Aufgabenstellung, einen Rollladenkasten, ein Verfahren sowie eine Vorrichtung wie eingangs angegeben, vorzusehen, die in vorteilhafter Weise herstellbar sind bzw. ein geeignetes Herstellungsverfahren und eine Vorrichtung hierzu zur Verfügung stellen.

Diese Aufgabe ist in Bezug auf den Rollladenkasten beim Gegenstand des Anspruches 1 gelöst, wobei darauf abgestellt ist, dass an beiden Kopfteilen an einer kopfteilseitigen Stirnfläche im Wesentlichen umlaufend Übermaßvorsprünge vorgesehen sind, die im Zuge eines Schweißvorganges eine homogene Schweißnaht erreichen lassen.

Diese Aufgabe ist weiter hinsichtlich des Verfahrens beim Gegenstand des Anspruches 5 gelöst, wobei darauf angestellt ist, dass das Kopfteil mit einer zugeordneten Stirnfläche des Deckenteils, des Vorderwandteils sowie vorzugsweise des einen oder der mehreren Bodenteile und/oder des Rückwandteils verschweißt wird, dass auf einer kopfteilseitigen Stirnfläche beider Kopfteile ausgebildete Übermaßvorsprünge im Zuge des Schweißvorgangs schmelzen, wie auch die hierauf anliegenden gegenüberliegenden Bereiche der Stirnflächen der Breitseitenwandungen der weiteren Teile, und dass hierdurch, ausgehend von einem im vormontierten Zustand bei einer in einer Längserstreckung des Rollladenkastens gegebenen Betrachtung bei einem gegenüber einem gewünschten Längserstreckungsmaß gegebenen Übermaß, aufgrund der vorgesehenen Übermaßvorsprünge das gewünschte Längserstreckungsmaß des Rollladenkastens nach dem Schweißvorgang erreicht wird.

Diese Aufgabe ist darüber hinaus hinsichtlich der Vorrichtung zur Herstellung eines Rollladenkastens beim Gegenstand des Anspruches 13 gelöst, wobei darauf abgestellt ist, dass zur Ausbildung einer Schweißverbindung zwischen den Kopfteilen und den weiteren Teilen in der Vorrichtung ein, bezogen auf einen eingesetzten Rollladenkasten, in Längsrichtung verfahrbares Halterungsteil mit Schweißbacken zur Anlage an einem der Kopfteile ausgebildet ist.

Ein solcher Rollladenkasten erweist sich insbesondere herstellungs-und handhabungstechnisch von Vorteil. Insbesondere zeitaufwendige Schraubvorgänge zur Fixierung der Teile des Rollladenkastens können entfallen. Mit der vorgesehenen Schweißverbindung ist eine hohe Festigkeit und Stabilität der Verbindungsstellen erreicht.

Darüber hinaus wird eine damit einhergehende unmittelbar verbundene Dichtigkeit im Bereich der erzeugten Schweißverbindungen erreicht (selbstverständlich mit Ausnahme der Öffnung im Rollladenkasten zum Ablassen des Rollladenpanzers und einer gegebenenfalls herkömmlich ausgebildeten Abdichtung des Revisionsteils).

Die zu dem Rollladenkasten zusammensetzbaren Teile können, insbesondere im Bereich der zu erstellenden Schweißverbindung, aus einem thermoplastischen Kunststoffmaterial bestehen. So können beispielsweise das Deckenteil, das eine oder die mehreren Bodenteile, das Vorderwandteil und das Rückwandteil als Kunststoff-Hohlkammerprofile im Kunststoffextrusionsverfahren hergestellt sein. Die beiden Kopfteile können im Kunststoffspritzverfahren hergestellt sein. Als thermoplastischer Kunststoff kann weiter beispielsweise Polyvinylchlorid (PVC) zur Anwendung kommen.

Auch können Teile des Rollladenkastens aus einem Hartschaumstoff bestehen, so beispielsweise das Decken- und / oder das Vorderwand- und / oder das Rückenwandteil. Dabei können die mit dem auch in diesem Fall bevorzugt als Kunststoffspritzteil ausgebildeten Kopfteil korrespondierenden Randbereich dieser Hartschaumstoffteile mit Adapterteilen aus einem thermoplastischen Kunststoff versehen sein, zur Ermöglichung der erfindungsgemäßen Schweißverbindung.

Derartige Adapterteile können in diesem Fall beispielsweise schuhartig den zugeordneten Randbereich des Hartschaumstoffteils, weiter bevorzugt abdichtend, umfassen.

Auch kann bezüglich des Vorderwand- und / oder Rückwand- und / oder Deckenteils jeweils eine mehrteilige Ausbildung gegeben sein.

Die mit dem Kopfteil jeweils zu verschweißenden Teile sowie die beiden Kopfteile werden bevorzugt in eine Vorrichtung eingesetzt, in welcher Vorrichtung Schweißbacken vorgesehen sind, zur entsprechenden Schweißbeaufschlagung der aneinander bevorzugt anliegenden und miteinander zu verbindenden Randkanten der Teile. Dabei können die Schweißbacken insbesondere in der Stellung, in welcher das Schweißverfahren durchgeführt wird, in Anlage an die Kopfteile treten.

Dabei kann bezüglich eines Kopfteiles vorgesehen sein, dass die diesbezüglichen Schweißbacken feststehend in der Vorrichtung ausgebildet sind. Gegebenenfalls in Längserstreckungsrichtung des Rollladenkastens gegenüberliegend vorgesehene Schweißbacken zur Herstellung der Schweißverbindung im Verbindungsbereich des diesen Schweißbacken zuordbaren Kopfteiles können beispielsweise über ein, die Schweißbacken halterndes, Halterungsteil kastenaußenseitig gegen das Kopfstück heranfahrbar ausgestaltet sein. Auch kann die Vorrichtung in Längserstreckung des herzustellenden Rollladenkastens nur einem Ende des Rollladenkastens zugeordnet Schweißbacken aufweisen. Nach Durchführung eines Schweißvorganges zur Befestigung der weiteren Rollladenteile mit dem einen Kopfstück kann der Rollladenkasten nach einem Wenden um 180° wieder in die Vorrichtung eingesetzt werden, um die weitere Schweißverbindung zwischen den weiteren Rollladenteilen und dem anderen Kopfteil mit denselben Schweißbacken durchzuführen.

Unter Nutzung einer solchen Vorrichtung können auch Rollladenkästen unterschiedlicher Längen durch Verschweißung hergestellt werden. Darüber hinaus kann über ein gegebenenfalls verfahrbares Halterungsteil eine Druckbelastung auf das unmittelbar zugeordnete Kopfteil ausgeübt werden, so dass die insgesamt in der Vorrichtung aufgenommenen und zu verschweißenden Teile im Zuge des Schweißvorganges unter Vorspannung zwischen den Kopfteilen angeordnet sein können.

Gemäß einer bevorzugten Ausgestaltung kann zunächst eine Verbindung der Kopfteile insbesondere mit dem Vorderwandteil und dem Deckenwandteil erfolgen, weiter insbesondere zufolge vorbeschriebener Verschweißung. Bei einem Rollladenkasten, bei welchem eine Revisionsöffnung im Bodenbereich vorgesehen ist, wird zudem auch eine Verbindung, insbesondere Schweißverbindung, mit dem Rückwandteil vorgenommen. Es kann sich entsprechend in diesem Montagestadium eine im Querschnitt quer zur Längserstreckung des Rollladenkastens betrachtete U-förmige Kastengestaltung ergeben.

Durch die vergleichsweise große Bodenöffnung des Rollladenkastens kann hiernach zunächst beispielsweise die Wickelwelle, gegebenenfalls mit einem Antriebsmotor, und gegebenenfalls ein Isolationsteil in den Rollladenkasten eingesetzt bzw. eingelegt werden. Erst hiernach wird bevorzugt das Bodenteil, gegebenenfalls mit einem weiteren, eine Revisionsklappe bildenden, Bodenteil, in den Rollladenkasten eingebaut. Dabei kann ein feststehendes Bodenteil in vorbeschriebener Weise mit den Kopfteilen verschweißt sein. Alternativ kann das feststehende Bodenteil, wie auch üblicherweise das eine Revisionsklappe bildende Bodenteil, mit den Kopfteilen und gegebenenfalls mit dem Rückwandteil steckverbunden sein.

Ist hingegen eine Revision im Bereich der Rückwand des Rollladenkastens vorgesehen, so kann in dem ersten Montageschritt das Rückwandteil nicht eingebunden sein, sodass die Kopfteile hierbei zunächst allein mit dem Deckenwandteil und dem Vorderwandteil verbunden, insbesondere schweißverbunden werden. Gegebenenfalls kann bei einer solchen Konfiguration auch ein feststehendes Bodenteil - gegebenenfalls auch mehrere Bodenteile - in diesem Montageschritt mit den Kopfteilen verbunden werden, sodass sich auch in dieser Konfiguration nach diesem ersten Montageschritt zunächst ein U-Querschnitt des Rollladenkastens eingestellt. Durch die U-Öffnung kann auch hier die Wickelwelle, gegebenenfalls ein Antriebsmotor und/oder ein Isolationsteil, in den Rollladenkasten eingesetzt werden. Das Rückwandteil wird hiernach bevorzugt an dem Deckenwandteil und dem Bodenteil steckgehaltert, gegebenenfalls zusätzlich auch oder auch alternativ an den Kopfteilen.

Zur Herstellung des Rollladenkastens wird so entsprechend in einem ersten Montageschritt bevorzugt nur eine Verbindung zwischen den Kopfteilen und dem Vorderwandteil sowie dem Deckenwandteil hergestellt, zusätzlich gegebenenfalls mit einem Bodenanteil oder dem Rückwandteil. Jedenfalls erfolgt bevorzugt keine Verbindung des einen oder der mehreren Bodenteile zusammen mit dem Rückwandteil zugleich mit der Herstellung der Verbindung von Vorderwandteil und Deckenwandteil mit den Kopfteilen.

Die Verschweißung der Teile miteinander kann unter Nutzung eines üblichen Kunststoff-Schweißverfahrens vorgenommen werden. Bevorzugt wird diesbezüglich die Verschweißung der Teile in einem UltraschallSchweißverfahren durchgeführt. Dabei wird die Schweißkraft mechanisch unter Nutzung einer Wechselstromerzeugung aufgebracht, wobei die sich hierbei entwickelnde Ultraschallschwingung unter Druck auf die zu verschweißenden Teile übertragen wird und hierbei Wärme erzeugt. Für das vorgeschlagene Kunststoff-Ultraschweißverfahren kann insbesondere Ultraschall im niedrigen Frequenzbereich von 20 - 100 kHz genutzt werden, weiter insbesondere im Bereich von 20 - 35 kHz.

Die für die Schweißverbindung bevorzugt vorgesehene Vorrichtung kann eine in Längsrichtung veränderbare, insbesondere durch das gegebenenfalls die Schweißbacken zugleich tragende Halterungsteil, dreiseitig geschlossene Aufnahme aufweisen, entsprechend bevorzugt angepasst an die Außenabmessungen des herzustellenden Rollladenkastens. Unter Nutzung dieser Aufnahme können die mit den Kopfteilen zu verbindenden weiteren Teile in der Vorrichtung ausgerichtet und gehalten sein. Die Aufnahme kann entsprechend bevorzugt zur Stabilisierung der Kunststoffteile zur Herstellung eines Rollladenkastens im Zuge des Schweißvorganges dienen.

Die Teile können in einer weiter möglichen Ausgestaltung mit dem Kopfteil, gegebenenfalls mit Ausnahme des Revisionsteils, vor Durchführung der Verschweißung steckverbunden sein. Ungeachtet der Verschweißung ist über eine solche Steckverbindung eine erste positionssichere Zuordnung der Teile zu den Kopfstücken erreicht. Der allein über Steckverbindungen zusammengesetzte Rollladenkasten kann so als Ganzes in die Vorrichtung eingesetzt werden, in welcher abschließend bevorzugt die Verschweißung der Verbindungsbereiche zwischen den Teilen durchgeführt werden kann.

In einer weiteren möglichen Ausgestaltung sind die Steckverbindungen zwischen Kopfteil und einem oder mehreren weiteren Teilen unabhängig von der Verschweißung gegeben. Die die Verrastung ergebenden Abschnitte, wie beispielsweise Rastvorsprünge und / oder Rastaufnahmen, können in einer möglichen Ausgestaltung auch nach Durchführen des Schweißvorganges nicht oder nicht im Wesentlichen durch Schmelzen oder Anschmelzen verändert sein.

Im Übrigen können auch die weiteren Teile, nämlich das Vorderwandteil, das Deckenteil und insbesondere das nicht als Revisionsteil genutzte weitere Bodenteil oder Rückwandteil untereinander steckverbunden sein, so weiter bevorzugt insbesondere in den jeweiligen, im Zusammenbauzustand Eckbereiche ausformenden Längsrandbereichen. Auch diese Steckverbindungen können, wie bevorzugt, unbeeinflusst sein durch die vorgenommene Verschweißung.

Die Verschweißung erfolgt unter Abschmelzen von an dem Kopfteil ausgebildeten Übermaßvorsprüngen . Solche Übermaßvorsprünge können alternativ, gegebenenfalls aber auch kombinativ zu einer Anordnung an dem Kopfteil, auch an der dem Kopfteil zugewandten Stirnfläche des weiteren Teils vorgesehen sein.

Die Übermaßvorsprünge schmelzen im Zuge der Utraschallverschweißung teilweise oder nahezu vollständig auf und können hiernach eine auch optisch ansprechende Schweißnaht entlang der Schweißzone zwischen Kopfteil und den weiteren Teilen ergeben. Auch etwaige durch Maßtoleranzen sich ergebende Spalte können zufolge Aufschmelzen der Übermaßvorsprünge im Zuge der Verschweißung geschlossen werden.

Nach dem Verschweißen der Teile kann ein gewünschtes Revisionsteil mit dem einen oder mehreren der weiteren Teile steckverbunden werden. Ein solches Revisionsteils kann ein Bodenteil oder auch ein Rückwandteil sein, welches zur Ermöglichung eines Zugriffs auf den in dem Rollladenkasten zu installierenden beziehungsweise installierten Rollladen unter Aufhebung der Steckverbindung abgeschwenkt oder entfernt werden kann. So kann im Falle eines durch das Rückwandteil gebildeten Revisionsteils dieses beispielsweise mit dem Deckenteil steckverbindbar ausgebildet sein.

Im Falle einer Revisionsöffnung unten, das heißt im Falle eines als Bodenteil ausgebildeten Revisionsteils kann das Rückwandteil mit dem Kopfteil verschweißt sein, während im Falle einer Revisionsöffnung hinten, das heißt Ausbildung des Rückwandteils als Revisionsteil, das Kopfteil nicht mit dem Rückwandteil verschweißt ist, dagegen aber bevorzugt mit dem Bodenteil.

So können in weiterer Ausgestaltung unterschiedliche Kopfstücke zur Herstellung von Rollladenkästen mit unterschiedlichen Revisionsöffnungen vorgehalten sein, die sich in der Anordnung der Übermaßvorsprünge unterscheiden können. So können beispielsweise bei einem herzustellenden Rollladenkasten mit einer Revisionsöffnung unten derartige Übermaßvorsprünge im Bereich des Vorderwandteils, eines Bodenteils, des Deckenteils und des Rückwandteils vorgesehen sein, während bei einer gewünschten Revisionsöffnung hinten derartige Übermaßvorsprünge im Bereich beider Bodenteile, des Vorderwandteiles und des Deckenteils ausgebildet sein können, während der Bereich des Rückwandteiles frei von solchen Übermaßvorsprüngen gehalten sein kann. Alternativ können auch gleiche Kopfstücke vorgesehen sein, zur Herstellung von Rollladenkästen sowohl mit Revisionsöffnung unten, als auch mit Revisionsöffnung hinten.

Die Verschweißung der weiteren Teile mit den beiden Kopfteilen kann auch, gemäß einer weiter möglichen Ausbildung, praktisch gleichzeitig im Bereich beider Kopfteile erfolgen.

Bei Ausbildung des Rückwandteils als Revisionsteil kann ein Bodenteil, gegebenenfalls aber auch mehrere Bodenteile, sogleich im Zuge der Schweißbefestigung von Deckenteil und Vorderwandteil mit dem Kopfteil schweißverbunden werden. Der Rückwandbereich kann in diesem Fall während des Schweißvorganges frei bleiben. Das Rückwandteil kann, gegebenenfalls erst nach Einsetzen eines Rollladenpanzers in den Rollladenkasten, beispielsweise an dem Deckenteil anscharniert werden.

Ist hingegen ein Bodenteil als Revisionsteil vorgesehen, kann gemäß einer möglichen Ausbildung ein Bodenbereich des herzustellenden Rollladenkastens in Bezug auf eine Verschweißung eines oder mehrerer Bodenteile vollständig ausgenommen sein. Die Bodenteile, also bevorzugt auch das nicht in diesem Sinne als Revisionsteil nutzbare Bodenteil, können in diesem Fall erst nach dem Schweißvorgang des Vorderwandteils, des Rückwandteils und des Deckenteils an das Kopfteil im Bodenbereich eingesetzt werden, weiter gegebenenfalls nach Einsetzen des Rollladenpanzers und / oder der Rollladenwelle in dem Rollladenkasten.

So kann weiter beispielsweise nach dem Verschweißen von Rückwandteil, Vorderwandteil und Deckenteil mit dem Kopfteil und Einsetzen des Rollladenpanzers und / oder der Rollladenwelle in den Rollladenkasten ein erstes Bodenteil mit dem Kopfteil mechanisch bleibend verbunden werden und ein zweites Bodenteil als Revisionsteil an das erste Bodenteil anscharniert werden. Die mechanisch bleibende Verbindung des ersten Bodenteils mit dem Kopfteil kann beispielsweise durch eine Rast- oder Clipsverbindung erreicht sein, alternativ beispielsweise durch eine Verschraubung.

### Kurze Beschreibung der Zeichnungen

Die Erfindung ist anhand der beigefügten Zeichnung erläutert, die aber lediglich Ausführungsbespiele darstellt. Ein Teil, dass nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: in explosionsperspektivischer Darstellung zwei Kopfteile, ein Deckenteil, zwei Bodenteile, ein Vorderwandteil und ein Rückwandteil zur Herstellung eines Rollladenkastens;
- Fig. 2: die Herausvergrößerung des Bereiches II in Figur 1;
- Fig. 3: die Herausvergrößerung des Bereiches III in Figur 2;
- Fig. 3a: eine der Figur 3 entsprechende Darstellung, jedoch eine alternative Ausgestaltung betreffend;
- Fig. 3b: eine weitere der Figur 3 entsprechende Darstellung, betreffend eine weitere Ausführungsform;
- Fig. 4: den Schnitt gemäß der Linie IV-IV in Figur 2, betreffend eine Steckverbindung zwischen einem Kopfteil und einem Rückwandteil;
- Fig. 5: eine Schnittdarstellung gemäß Figur 4, jedoch bei Aufnahme der zusammengesteckten Teile, hier des Kopfteils und des Rückwandteils, in einer Vorrichtungsaufnahme zum Verschweißen der Teile miteinander;
- Fig. 6: die Vorrichtung zur Herstellung des Rollladenkastens in schematischer, perspektivischer Darstellung;
- Fig. 7: die schematische Ansicht gemäß Pfeil VII in Figur 6;
- Fig. 8: eine schematische Ansichtsdarstellung gegen ein Kopfteil mit Anordnung von Übermaßvorsprüngen, betreffend eine Ausführungsform für einen Rollladenkasten mit einer Revisionsöffnung unten;
- Fig. 9: eine der Figur 8 entsprechende schematische Darstellung, jedoch eine Ausführungsform für einen Rollladenkasten mit einer Revisionsöffnung hinten;
- Fig. 10: in einer Querschnittdarstellung einen Eckbereich zwischen einem Boden- und einem Rückwandbereich des Rollladenkastens, bei Ausbildung eines Bodenteils als Revisionsteil;
- Fig. 11: den Schnitt gemäß der Linie XI-XI in Figur 10, mit dazu gehöriger Vergrößerungsdarstellung;
- Fig. 12: den Schnitt gemäß der XII-XII in Figur 11, eine Ausführungsform betreffend;
- Fig. 13: eine der Figur 10 im Wesentlichen entsprechende Darstellung, jedoch bei Ausbildung eines Rückwandteils als Revisionsteil.

### Beschreibung der Ausführungsformen

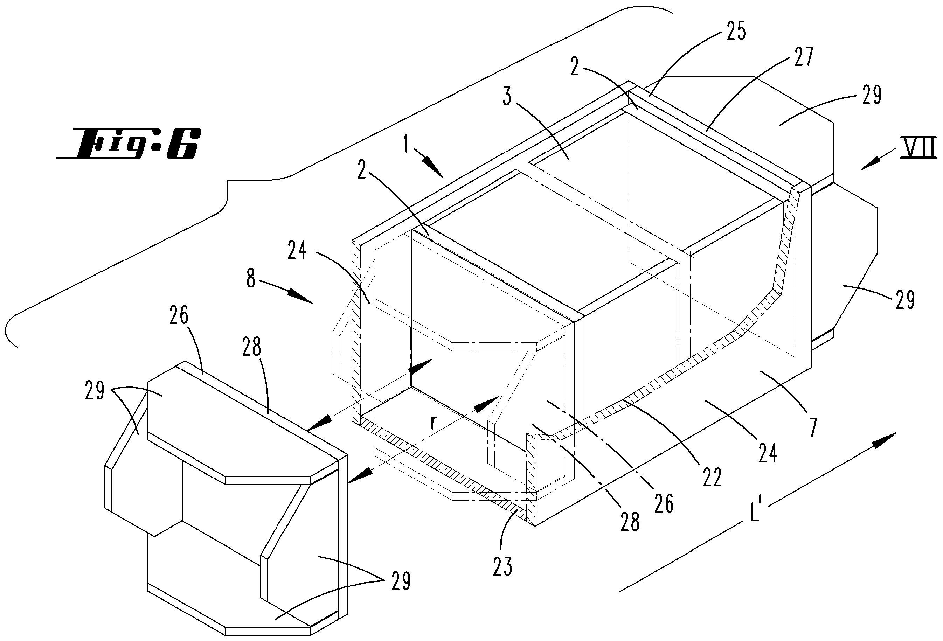

Dargestellt und beschrieben ist ein Rollladenkasten 1, im Wesentlichen aufweisend zwei Kopfteile 2, ein Deckenteil 3, zwei Bodenteile 4 und 5, ein Vorderwandteil 6 und ein Rückwandteil 7. Ein solcher Rollladenkasten 1 kann, wie bevorzugt, in einer wie in Figur 6 dargestellten Vorrichtung 8 hergestellt werden, wobei zwischen den Teilen 3 bis 7 und den Kopfteilen 2 eine Schweißverbindung bevorzugt ist. Wenngleich nicht dargestellt, können auch das Deckenteil 3 und / oder das Vorderwandteil 6 und / oder das Rückwandteil 7 mehrteilig ausgebildet sein.

Die Kopfteile 2 können, wie auch weiter bevorzugt, als Kunststoffspritzteile vorliegen, während gemäß einer bevorzugten Ausgestaltung die weiteren Teile (Deckenteil 3, Bodenteile 4 und 5, Vorderwandteil 6 und Rückwandteil 7) als Kunststoffextrusionsteile hergestellt sein können. Alternativ können die weiteren Teile, insbesondere bei Ausbildung insbesondere des Deckenteils 3, des Vorderwandteils 6 und / oder des Rückwandteils 7 aus einem Hartschaumstoff, als schuhartig den Randbereich der Decken- beziehungsweise Wandteile des Rollladenkastens 1 aufnehmende Adapterteile aus einem thermoplastischen Kunststoff gebildet sein.

Die weiteren Teile können zudem als Hohlkammerprofilteile gebildet sein, entsprechend im Wesentlichen aufweisend zwei zueinander parallel verlaufende Breitseitenwandungen 9, die über in einem Querschnitt im Wesentlichen senkrecht zur Ebenenerstreckung dieser Breitseitenwandungen 9 verlaufende Stege 10 miteinander verbunden sind. Die Stege 10 begrenzen zusammen mit den Breitseitenwandungen 9 die Kammern 11.

Die weiteren Teile bilden im zusammengesetzten Zustand eine mit Bezug auf einen Querschnitt quer zur Längserstreckung L des herzustellenden Rollladenkastens 1 im Wesentlichen umlaufende Kastenwandung, wozu die weiteren Teile untereinander, insbesondere im jeweiligen Eckbereich, steckverbunden sein können. So kann jedes weitere Teil einen Rastvorsprung 12 aufweisen, der rastend in eine entsprechend ausgeformte Rastausnehmung 13 des weiteren Teiles eingreifen kann.

Bezüglich der möglichen Ausgestaltung der Vorsprünge und Ausnehmungen zum Zusammensetzen der Kastenwandung wird auf die eingangs zitierte DE 10 2007 025 645 B4 verwiesen. Der Inhalt dieser Patentschrift wird hiermit vollinhaltlich in die Offenbarung vorliegender Erfindung mit einbezogen, auch zu dem Zweck, Merkmal dieser Patentanmeldung in Ansprüche vorliegender Erfindung mit einzubeziehen.

Über eine solche Rast-/Steckverbindung können auch, wie weiter bevorzugt, die beiden Bodenteile 4 und 5 miteinander verbunden sein. Dabei kann insbesondere das Bodenteil 4 zum Aufsetzen und bevorzugt auch zum Verbinden des Rollladenkastens 1 insgesamt auf einen Fenster- und / oder Türrahmen dienen.

Das Vorderwandteil 6 erstreckt sich im Wesentlichen senkrecht zu den Bodenteilen 4 und 5 sowie zu dem Deckenteil 3, ist dabei bevorzugt der Gebäudeaußenseite A zugewandt, während das parallel zu diesem Vorderwandteil 6 verlaufende Rückwandteil 7 der Gebäudeinnenseite B zugewandt ist.

Die Kopfteile 2 können, wie weiter bevorzugt, einen quer zur Längserstreckung L des Rollladenkastens 1 betrachteten Grundriss aufweisen, der im Wesentlichen angepasst ist an die Außenkontur der durch die weiteren Teile formbaren Kastenform.

Jedes Kopfteil 2 weist dabei im Bereich der aufeinander zu weisenden Innenseite 14 eine angeformte Aufnahme 15 für eine nicht dargestellte Wickelwelle eines in dem Rollladenkasten 1 aufzunehmenden Rollladens auf. Dessen Rollladenpanzer ist durch eine im Bodenbereich des Rollladenkastens 1 belassene Öffnung zwischen Vorderwandteil 6 und dem Bodenteil 4 aus dem Rollladenkasten 1 herausführbar. Ein jeweils an dem Kopfteil 2 angeformtes, in den Zeichnungen nicht dargestelltes Leitteil kann dabei zur gezielten Führung des ab- und aufwickelbaren Rollladenpanzers dienen.

Die Kopfteile 2 können im Wesentlichen umlaufend zwei, weiter im Wesentlichen parallel zueinander verlaufende, senkrecht zu einer bevorzugt ebenen Außenfläche 17 der Kopfteile 2 über die Innenseite 14 hinaus abragende Kopfteilwandungen 18 aufweisen, wobei die in Umfangsrichtung betrachtete äußere Kopfteilwandung 18 zugleich den Grundriss des Kopfteiles 2 bestimmen kann.

Die in Längserstreckung L des hergestellten Rollladenkastens 1 betrachtete Breite h dieser Kopfteilwandungen 18 entspricht einem Bruchteil einer Tiefenerstreckung c und / oder einer Höhenerstreckung d des Kopfteiles 2 der Nutzungsstellung, so bevorzugt etwa einem Fünfzigstel bis einem Fünftel, weiter gegebenenfalls etwa einem Zwanzigstel bis einem Zehntel.

Zwischen den Kopfteilwandungen 18 können den im nutzbaren Zustand des Rollladenkastens 1 feststehenden, nicht reversiblen weiteren Teilen zugeordnete Steckvorsprünge ausgebildet sein, die jeweils über die in Richtung auf das gegenüberliegende Kopfteil 2 weisende freie Stirnfläche 20 der Kopfteilwandungen 18 frei hinausragen können, etwa mit dem 0,5-Fachen bis 1,5-Fachen der Kopfteilwandungs-Breite h.

Weiter können dem im nutzbaren Zustand des Rollladenkastens 1 als Revisionsteil dienenden weiteren Teil keine solchen Steckvorsprünge 19 zugeordnet sein.

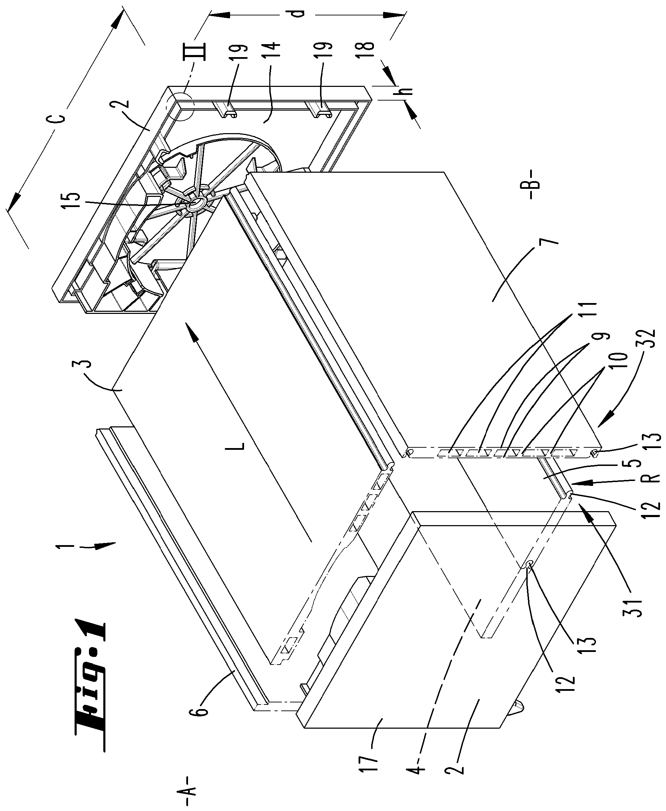

In dem in den Figuren 1 bis 8 dargestellten Ausführungsbeispiel ist als Revisionsteil R das weitere Bodenteil 5 vorgesehen.

Alternativ kann beispielsweise auch das Rückwandteil 7 als Revisionsteil R vorgesehen sein. Bei einer solchen Konfiguration ist die Anordnung der Steckvorsprünge 19 entsprechend im Bodenbereich vorgesehen, während im Rückwandbereich diese bevorzugt fehlen.

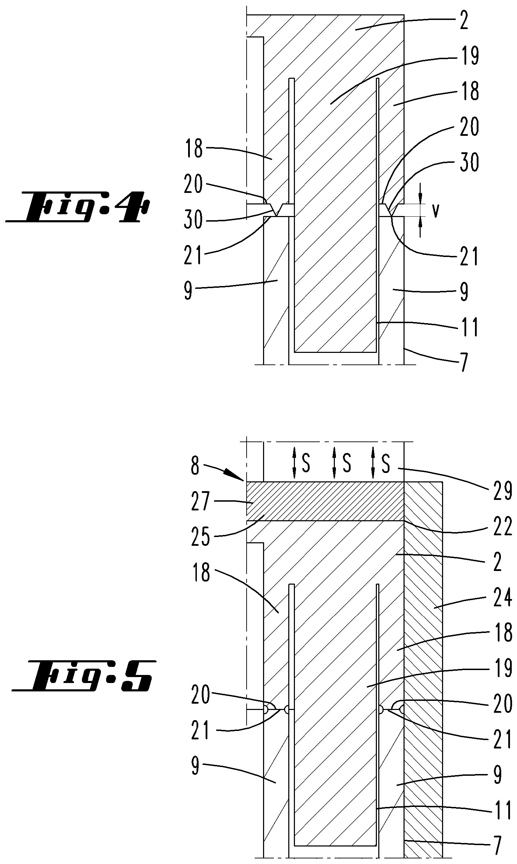

Die Steckvorsprünge greifen für eine erste (Vor-)Montage des Rollladenkastens 1 in zugeordnete Kammern 11 der weiteren Teile ein. Dabei können in dieser Vor-Montagestellung die in Längserstreckung L betrachteten Stirnflächen 21 der Breitseitenwandungen 9 an den Stirnflächen 20 der Kopfteilwandungen 18 anliegen (vergleiche Figur 4).

Anstelle einer aus dieser Vor-Montagestellung heraus vorgenommenen Verschraubung der Kopfteile 2 mit den weiteren Teilen 3 bis 7 werden die Kopfteile 2 erfindungsgemäß mit den weiteren Teilen 3 bis 7, mit Ausnahme eines vorgesehenen Revisionsteiles R, verschweißt.

Hierzu kann der zufolge Steckverbindung der weiteren Teile 3 bis 7 (mit Ausnahme des Revisionsteiles R, gegebenenfalls Bodenteil 5 oder Rückwandteil 7) gebildete und jeweils endseitig mit den Kopfteilen 2 versehene vormontierte Kasten in eine Aufnahme 22 der Vorrichtung 8 eingesetzt werden (vergleiche Figur 6).

Die Aufnahme 22 kann insgesamt im Wesentlichen eine Kastenform aufweisen, weiter im Wesentlichen hierbei aufweisend einen Boden 23 und zwei senkrecht zum Boden 23 ausgerichtete Seitenwandungen 24, darüber hinaus eine feste Stirnwand 25. Gegebenenfalls kann des Weiteren nach Einsetzen des vormontierten Kastens eine die Aufnahme 22 schließende Decke aufgesetzt werden.

Die quer zur Längserstreckung L' der Aufnahme 22 betrachtete Tiefe zwischen den aufeinander zuweisenden Innenwandungen der Seitenwandungen 24, wie auch die von der Oberfläche des Bodens 23 senkrecht nach oben abgetragene Höhe der Aufnahme 15 können, wie auch bevorzugt, angepasst sein an die Tiefenerstreckung c und die Höhenerstreckung d der Kopfteile 2 und somit des Rollladenkastens 1 insgesamt.

Die Länge der Aufnahme 14 in Längserstreckungsrichtung L' kann mindestens der des herzustellenden Rollladenkastens 1 entsprechen. Darüber hinaus kann bezüglich dieser Länge ein Übermaß gegeben sein, so dass Rollladenkästen 1 unterschiedlicher Längserstreckungsmaße in der Vorrichtung 8 verschweißt werden können. Die Aufnahme 14 kann aber auch nur eine Länge aufweisen, die allein eine Umfassung des zu verschweißenden Endbereichs des Rollladenkastens 1 ermöglicht.

Die der feststehenden Stirnwand 25 in Längserstreckungsrichtung gegenüberliegende weitere Stirnwand 26 kann gemäß einer möglichen Ausführungsform gegenüber der Aufnahme 15 als solche in Längserstreckung L' verlagerbar angeordnet sein, bevorzugt schiebeverlagerbar unter stets paralleler Ausrichtung der Stirnwand 26 zu der gegenüberliegenden Stirnwand 25. (Siehe Verlagerungs-Doppelpfeil r in Figur 6).

Beide Stirnwände 25 und 26 können zudem als Halterungsteile 27, 28 für Schweißbacken 29 dienen. Diese Schweißbacken 29 können im Falle einer, wie auch bevorzugten, Ultraschallverschweißung als Sonotroden ausgebildet sein.

Mit Bezug auf eine Projektion in Richtung der Längserstreckung L' der Vorrichtung 8 sind hier die Halterungsteile 27, 28 mit ihren Schweißbacken 29 beziehungsweise Sonotroden so angeordnet, dass diese im Wesentlichen in Überdeckung liegen zu den Stirnflächen 20 und 21 der Kopfteile 2 sowie der mit diesen Kopfteilen 2 zu verschweißenden weiteren Teile. So können weiter je Halterungsteil 27, 28 vier solcher Schweißbacken 29 vorgesehen sein, jeweils eine zugeordnet den Stirnflächen 21 des Vorderwandteiles 6, jeweils eine zugeordnet den Stirnflächen 21 des Deckenteiles 3, jeweils eine zugeordnet den Bodenteilen 4 und gegebenenfalls 5, sowie eine zugeordnet gegebenenfalls dem Rückwandteil 7.

Die Schweißbacken 29 beziehungsweise Sonotroden können darüber hinaus gemäß einer möglichen Ausführungsform einzeln aktiviert beziehungsweise auch deaktiviert werden, so dass beispielsweise bei einem durch das Rückwandteil 7 gebildeten Revisionsteils R die zugeordnete Schweißbacke 29 beziehungsweise Sonotrode nicht erregt wird.

Der vormontierte Rollladenkasten 1 kann in der Vorrichtung 8 in der Aufnahme 22 zwischen den Stirnwänden 25 und 26 eingespannt sein. Es kann sich im Zuge der Verschweißung eine Druckbelastung in Längserstreckung L des Rollladenkastens 1 ergeben.

Mit Aktivierung der Schweißbacken 29 beziehungsweise Sonotroden, bei der sich eine Vibrationsrichtung in Pfeilrichtung s gemäß Figur 5 im Wesentlichen senkrecht zu den Stirnflächen 20 und 21 im Verbindungsbereich ergibt, wird ein Verschmelzen der aneinander liegenden Stirnwandbereiche von Kopfteilen 2 und den weiteren Teilen 3 bis 7 erreicht. Dies kann gegebenenfalls allein bei bevorzugt zumindest annähernd umlaufender vollflächiger Anlage der Stirnflächen 20 und 21 aneinander gegeben sein.

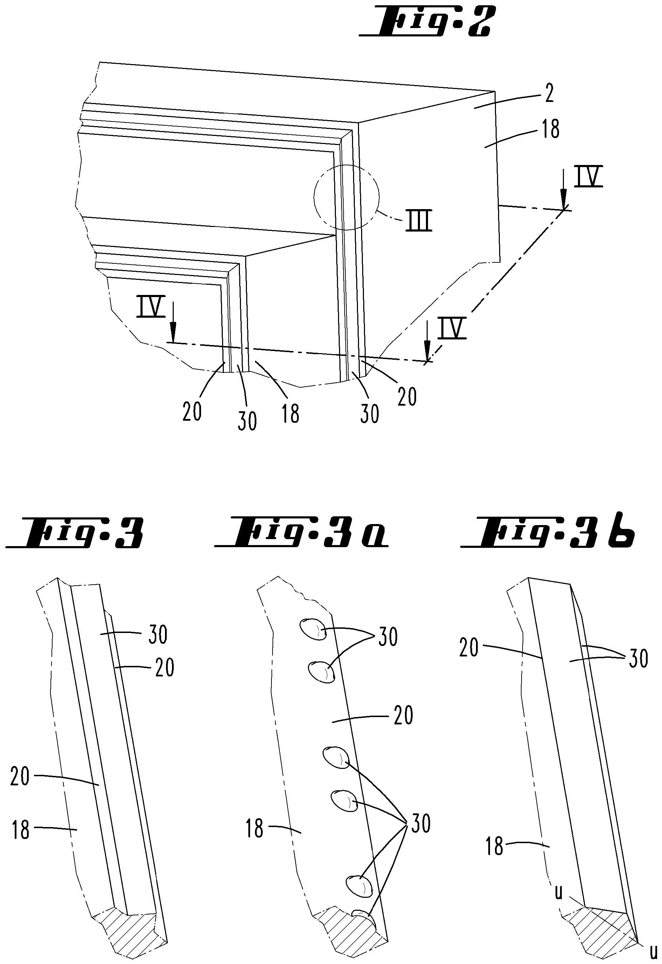

Wie weiter insbesondere aus den Detail- und Schnittdarstellungen in den Figuren 2 bis 4 ersichtlich, sind auf der kopfteilseitigen Stirnfläche 20 Übermaßvorsprünge 30 vorgesehen sein. Diese Übermaßvorsprünge 30 sind im Wesentlichen umlaufend an jedem Kopfteil 2 beziehungsweise an jeder Kopfteilwandung 18 stirnflächenseitig vorgesehen sein, wobei bevorzugt diese einstückig und materialeinheitlich insbesondere mit den Kopfteilwandungen 18 ausgebildet sein können. Die Übermaßvorsprünge 30 können zudem gemäß den Darstellungen insbesondere in den Figuren 2 und 3 in Art einer mittig entlang der jeweiligen Stirnfläche 20 verlaufenden Rippe gebildet sein. Hieraus kann sich gemäß der Schnittdarstellung in Figur 4 zunächst eine entlang der Erstreckung der Stirnflächen 20 und 21 betrachtete linienartige Anlage der Übermaßvorsprünge 30 an der gegenüberliegenden Stirnfläche 21 der Breitseitenwandungen 9 der weiteren Teile vor Durchführung des Schweißvorgangs ergeben.

Mit Bezug auf einen Querschnitt durch den Stirnflächenbereich einer Kopfteilwandung 18 quer zur Längserstreckung der Stirnfläche 20 kann sich eine wulst- oder dachförmige Querschnittsgestaltung des Übermaßvorsprunges 30 ergeben.

Darüber hinaus kann auch die Stirnfläche 20 mit Bezug auf einen solchen Querschnitt insgesamt dachförmig gestaltet sein, wobei der Übermaßvorsprung 30 definiert ist durch einen über eine senkrecht zur Ebenenerstreckung der Breitseitenwandungen 9 sich im Fußbereich des Dachabschnittes ergebenden Basislinie u hinaus ragenden Abschnitt (vergleiche Figur 3b).

Gemäß der weiteren alternativen Ausführungsform in Figur 3a können auch über die Länge der jeweiligen Stirnfläche 20 betrachtet zueinander gegebenenfalls gleichmäßig beabstandete, beispielsweise halbkugel- oder linsenkopfförmig ausgebildete Übermaßvorsprünge 30 vorgesehen sein.

Im Zuge des Schweißvorganges, beispielsweise, wie auch bevorzugt, eines Ultraschallschweißvorganges, schmelzen die Übermaßvorsprünge 30 wie auch die hierauf anliegenden gegenüberliegenden Bereiche der Stirnflächen 21 der Breitseitenwandungen 9 der weiteren Teile an, woraus sich aufgrund der insbesondere thermoplastischen Eigenschaften des gewählten Kunststoffmaterials eine homogene Schweißnaht sich ergeben kann.

Die Verschweißung kann, wie auch bevorzugt, praktisch gleichzeitig im Bereich beider Stirnwände 25 und 26 erfolgen, wobei weiter bei einer möglichen gezielten Aktivierung und Deaktivierung einzelner Schweißbacken 29 dies, wie auch bevorzugt, bezüglich beider Stirnwände 25 und 26 synchron erfolgen kann. Alternativ erfolgt die Verschweißung im Bereich der Stirnwände 25 und 26 nacheinander, gegebenenfalls unter Nutzung derselben Schweißbacken 29 eines Halterungsteils.

Während der Rollladenkasten 1 im vormontierten Zustand in Längserstreckung L betrachtet gegebenenfalls noch ein gegenüber dem zu erzielenden Längserstreckungsmaß betrachtetes Übermaß aufgrund der vorgesehenen Übermaßvorsprünge 30 aufweist, ist nach dem Schweißvorgang bevorzugt das gewünschte Längserstreckungsmaß des Rollladenkastens 1 erreicht, dies auch infolge der über die verfahrbare Stirnwand 26 eingebrachten Belastung auf den Rollladenkasten 1 in Längserstreckung L.

Dabei kann je Kopfteil 2 ein Übermaß v von beispielsweise 2 mm oder weniger bis hin zu 1 mm oder weniger, weiter beispielsweise 0,5 mm gegeben sein.

Je nachdem, ob als Revisionsteil R das Bodenteil 5 oder das Rückwandteil 7 dienen soll, können unterschiedliche Kopfstücke 2 zur Anwendung kommen. Auch ist möglich, für beide Revisionsvarianten gleiche Kopfstücke 2 zu verwenden.

So können die vorbeschriebenen Übermaßvorsprünge 30 in einer möglichen Ausführungsform allein nur an den Stirnflächen 20 vorgesehen sein, denen ein feststehendes weiteres Teil zugeordnet wird. Zugeordnet dem Revisionsteil R kann nach dieser Ausführung vorgesehen sein, dass keine Übermaßvorsprünge 30 vorgesehen sind.

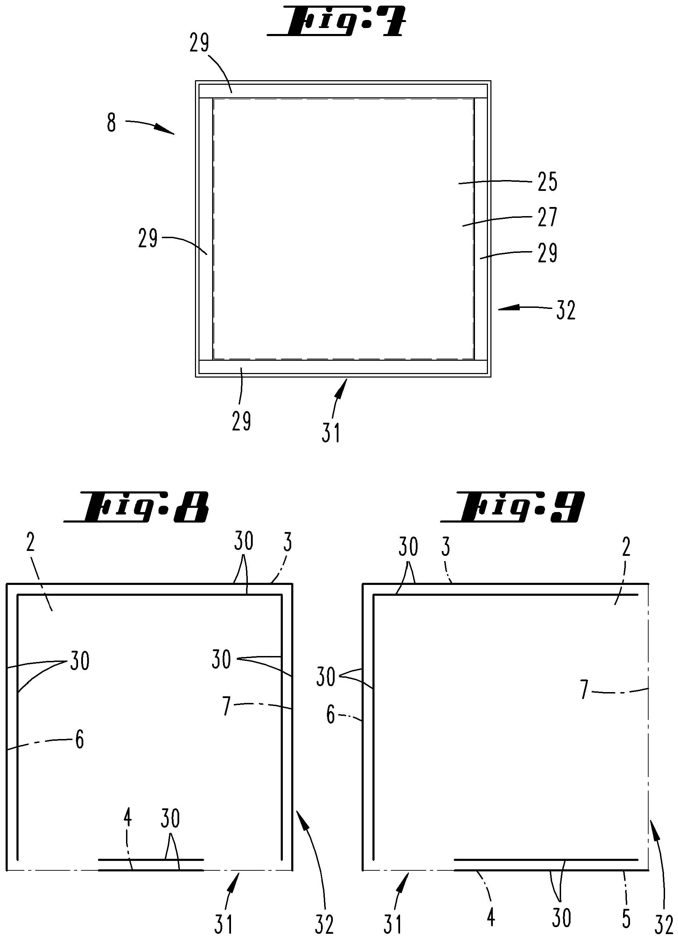

In den Figuren 8 und 9 sind in schematischer Darstellung zwei Ausführungsformen des Kopfteiles 2 dargestellt, wobei in durchgezogener Linienart allein schematisch die Übermaßvorsprünge 30 gezeigt sind. In strickpunktierter Linienart ist weiter die Gesamtkontur der Kopfteile 2 ergänzt.

Das Kopfteil 2 gemäß Figur 8 ist entsprechend ausgebildet für ein Revisionsteil R in Form des weiteren Bodenteils 5. So ist bei dieser Ausführungsform zugeordnet dem Rückwandteil 7 auf der jeweiligen Stirnfläche 20 mindestens ein Übermaßvorsprung 30 vorgesehen. Es erfolgt im Zuge des Schweißvorganges eine Verschweißung des Kopfteils 2 auch mit dem Rückwandteil 7.

Bevorzugt wird das Bodenteil 4 erst in einem später folgenden Montageschnitt zwischen den Kopfteilen 2 eingesetzt und bevorzugt mit diesen schweißverbunden. Dadurch wird nach einem ersten Montageschritt der gesamte Bodenbereich frei gehalten. Durch die vergleichsweise große Öffnung lassen sich beispielsweise die Wickelwelle, sowie gegebenenfalls ein Antriebsmotor und / oder ein Isolationselement in den Rollladenkasten einsetzen.

Figur 9 hingegen zeigt ein Kopfteil 2 zur Anordnung des Rückwandteiles 7 als Revisionsteil R. Entsprechend ergeben sich Übermaßvorsprünge 30 auch zur Schweißfestlegung des weiteren Bodenteiles 5.

Das Revisionsteil R, Bodenteil 5 oder Rückwandteil 7 kann nach Herstellung des Rollladenteils 1, entsprechend nach Verschweißen der Kopfteile 2 mit den weiteren Teilen, an den jeweilig zuordbaren Enden steckgehaltert werden. So kann bei einer bodenseitigen Revisionsöffnung das weitere Bodenteil 5 randseitig an dem Bodenteil 4 und / oder fußseitig des fest an dem Kopfteil 2 verschweißten Rückwandteiles 7 verrastet sein, während bei einer rückwandseitigen Revisionsöffnung das das Revisionsteil R bildende Rückwandteil 7 fußseitig an dem weiteren Bodenteil 5 und / oder kopfseitig an dem Deckenteil 3 rastverbunden sein kann.

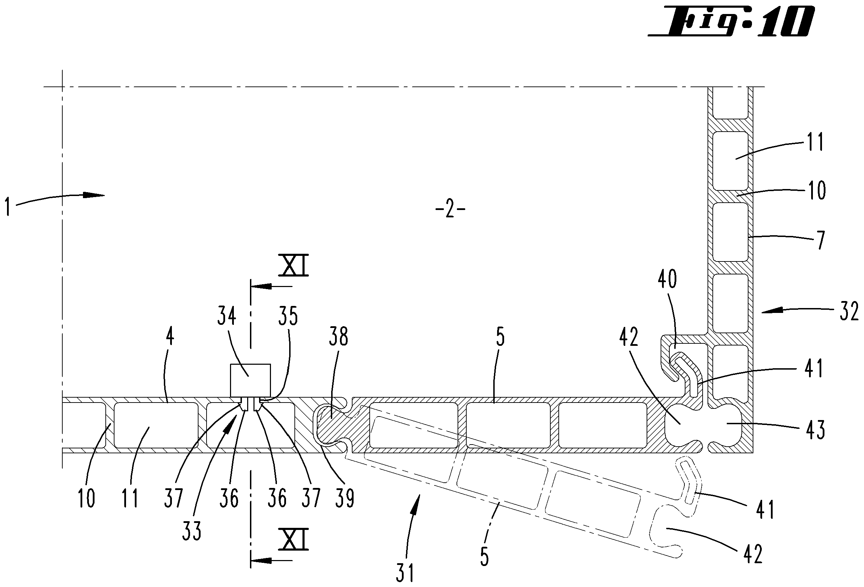

Figur 10 zeigt in einer Querschnittdarstellung durch einen im Wesentlichen fertiggestellten Rollladenkasten 1 einen Eckbereich zwischen einem Bodenbereich 31 und einem Rückwandbereich 32, in einer Konfiguration, in welcher ein Bodenteil, hier das Bodenteil 5, als Revisionsteil R ausgebildet ist.

Wie beschrieben, ist in dieser Konfiguration das Rückwandteil 7 mit dem Kopfteil 2 beziehungsweise mit beiden Kopfteilen 2 schweißverbunden.

In einer möglichen Ausgestaltung werden bei einer solchen Konfiguration beide Bodenteile 4 und 5 erst nach dem Schweißvorgang zur Verbindung des Rückwandteiles 7, des Vorderwandteils 6 und des Deckenteiles 3 mit den Kopfteilen 2 im Bodenbereich 31 eingesetzt, gegebenenfalls erst nach Einsetzen eines Rollladenpanzers und / oder einer Rollladenwelle in den so vorbereiteten Rollladenkasten 1.

Dabei kann das bevorzugt nicht als Revisionsteil R dienende erste Bodenteil 4 mit dem Kopfteil 2 beziehungsweise mit beiden Kopfteilen 2 mechanisch bleibend verbunden sein. Dies kann erreicht werden durch eine aus dem Stand der Technik bekannte Verschraubung des Bodenteiles 4 mit den Kopfteilen 2.

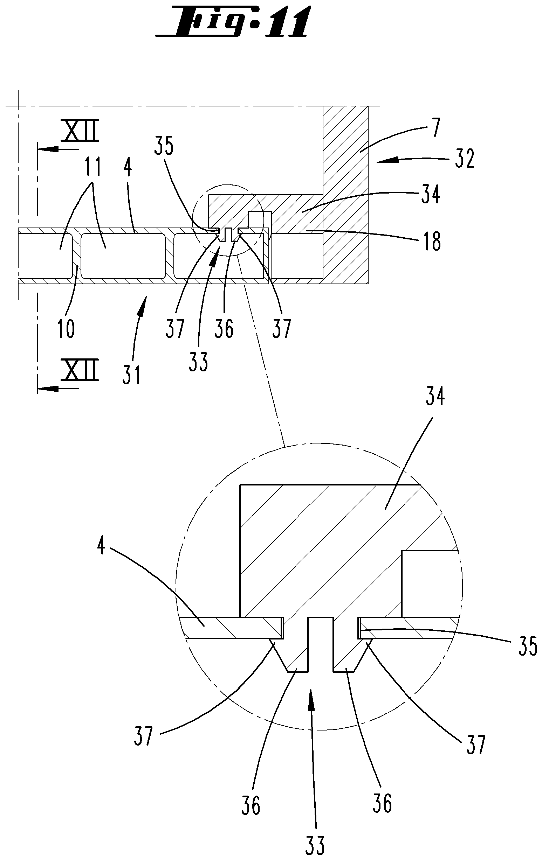

Bevorzugt wird, wie auch dargestellt, eine Rast- oder Clipsverbindung. Hierzu kann gemäß der in den Figuren 10 und 11 dargestellten Ausführung beispielsweise ein pilzkopfartiges Rastteil 33 vorgesehen sein, welches rückwandseitig angeordnet sein kann. Ein solches Rastteil 33 kann beispielsweise über einen Steg 34 materialeinheitlich und weiter bevorzugt auch einstückig mit dem Kopfteil 2 ausgebildet sein. Ein gegebenenfalls das Rastteil 33 tragender Steg 34 kann gemäß den Darstellungen über die freie Stirnfläche 20, 21 der Kopfteilwandung 18 hinausragen, wobei das beispielsweise endseitig an dem Steg 34 ausgebildete Rastteil 33 im Wesentlichen - mit Bezug auf eine übliche Nutzungsstellung des Rollladenkastens 1 - nach unten weisen kann.

Darüber hinaus können an jedem Kopfteil 2 mehrere solcher Rastteile 33 vorgesehen sein.

Jedes Rastteil 33 greift in entsprechender Zuordnungsstellung in eine Durchgangsöffnung 35 des Bodenteiles 4 ein. Die Durchgangsöffnungen 35 können beispielsweise eingestanzt oder eingebohrt sein.

Ein Rastteil 33 kann darüber hinaus in Rastrichtung betrachtet längsgeteilt sein. So können gemäß dem Ausführungsbeispiel zwei oder auch vier Rasteinzelteile 36 ausgebildet sein, die bei einem Einrastvorgang elastisch gegeneinander verschwenken können und dann im eingerasteten Zustand mit Hintergriffabschnitten 37 einen Lochrand übergreifen.

Eine solche Rastverbindung kann alternativ oder auch kombinativ zu der in Figur 11 gezeigten Lösung beispielsweise zwischen dem Bodenteil 4 und dem einen oder beiden Kopfteilen 2 gegeben sein.

Auch können das Rastteil 33 an dem Bodenteil 4 und die Durchgangsöffnung 35 an dem korrespondierenden Teil (Rückwandteil 7 und / oder Kopfteil 2) ausgebildet sein.

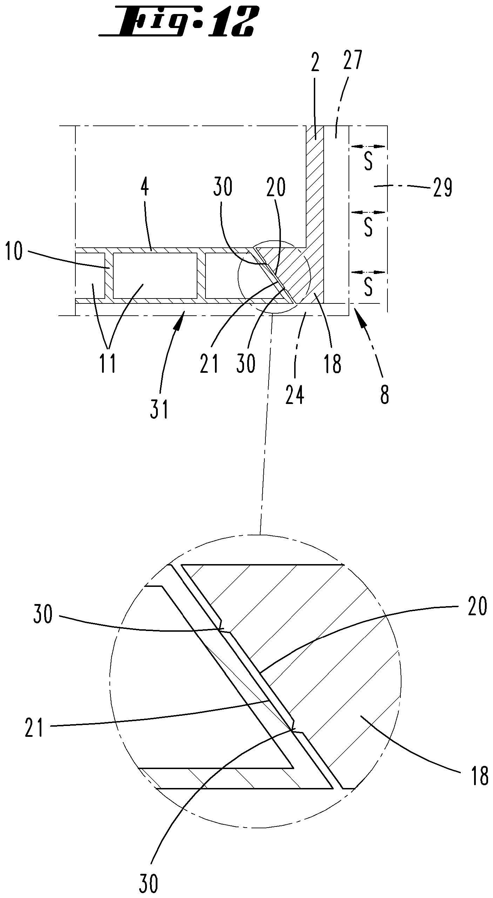

In Figur 12 ist eine mögliche Ausgestaltung dargestellt, bei welcher das rastgehalterte Bodenteil 4 zusätzlich (und abschließend) mit dem Kopfteil 2 verschweißbar ist, bevorzugt unter Nutzung der in Figur 6 schematisch dargestellten Vorrichtung 8. Da das Einsetzen und Steckhaltern des Bodenteils 4 bevorzugt nach Erstellung der Schweißverbindung zwischen den Kopfteilen 2, dem Vorderwandteil 6 und dem Deckenteil 3 vorgenommen werden wird, ist eine Ausbildung der korrespondierenden Stirnflächen 20 und 21 des Kopfteils 2 und des Bodenteils 4 bei im Wesentlichen paralleler Ausrichtung entlang einer schrägen Ebene gewählt. Die Schweißverbindung wird wie anhand der Figuren 4 und 5 beschrieben erreicht.

Das zweite, das Revisionsteil R bildende Bodenteil 5 kann, wie auch bevorzugt, an dem ersten mechanisch bleibend an dem Kopfstück 2 befestigten Bodenteil 4 anscharniert sein. Hierzu kann das zweite Bodenteil 5 in einer möglichen Ausgestaltung beispielweise einen in Richtung auf das erste Bodenteil 4 vorragenden Rastvorsprung 38 aufweisen, der mit einer entsprechenden Rastausnehmung 39 randseitig des Bodenteils 4 scharnierartig zusammenwirkt.

Zugewandt einem im üblichen Nutzungszustand des Rollladenkastens 1 unteren Endbereich des Rückwandteils 7 kann eine Verrastung des als Revisionsteil R ausgebildeten Bodenteils 5 mit dem Rückwandteil 7 erreicht sein. Hierzu kann das Rückwandteil 7 beispielsweise zugewandt dem Inneren des Rollladenkastens 1 eine Rastausnehmung 40 aufweisen, in die ein Rastvorsprung 41 des zweiten Bodenteiles 5 rastend einfallen kann.

In strichpunktierter Linienart ist in Figur 10 eine Abschwenkstellung des zweiten Bodenteils 5 beziehungsweise des Revisionsteils R dargestellt.

Es versteht sich, dass das zweite Bodenteil 5 zur Ausbildung desselben als Revisionsteils R nicht mit dem einen oder beiden Kopfteilen 2 verbunden ist, so dass diesbezüglich weder eine Schweißverbindung noch eine mechanisch bleibende Verbindung vorgesehen ist.

Die in Figur 10 endseitig des zweiten Bodenteils 5 und zugewandt dem Rückwandteil 7 ausgebildete Ausnehmung 42 des zweiten Bodenteiles 5, alternativ eine zugeordnete Ausnehmung 43 des Rückwandteiles 7, kann genutzt sein zur Aufnahme eines elastischen Dichtungselements, das in der Revisionsteil-Verschlussstellung dichtend mit dem anderen Kastenteil zusammenwirken kann.

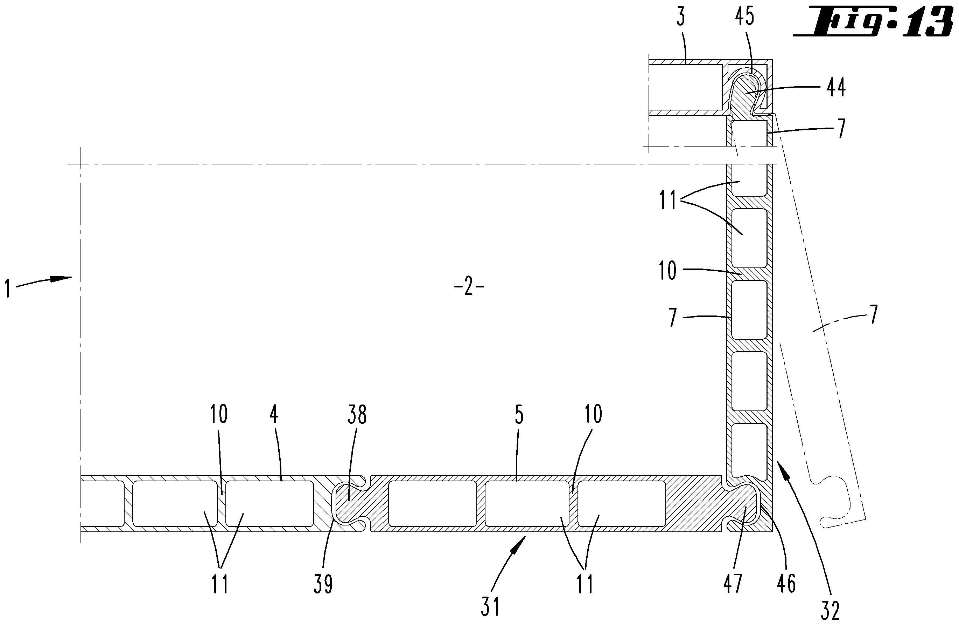

In Figur 13 ist eine Schnittdarstellung gemäß Figur 10 gezeigt, jedoch bezüglich einer Ausbildung des Rückwandteiles 7 als Revisionsteil R.

In diesem Fall können die beiden Bodenteile 4 und 5 im Bodenbereich 31 des Rollladenkastens 1, gegebenenfalls untereinander, wie auch dargestellt, steckverbunden, mit den Kopfteilen 2 gemäß dem vorbeschriebenen Verfahren schweißverbunden sein.

Das Rückwandteil 7 kann, gegebenenfalls erst nach Einsetzen eines Rollladenpanzers und / oder einer Rollladenwelle in den Rollladenkasten 1, anscharniert an dem Deckenteil 3 gehalten sein. Hierzu kann zugewandt dem Deckenteil 3 das Rückwandteil 4 einen Rastvorsprung 44 aufweisen, der in eine angepasste Rastausnehmung 45 des Deckenteiles 3 gemäß der Darstellung in Figur 12 eingreift.

In strichpunktierter Linienart ist eine Abschwenkstellung des Rückwandteiles 7 gezeigt.

Zugeordnet dem Bodenbereich 31, insbesondere zugeordnet dem zugewandten Randbereich des zweiten Bodenteiles 5, kann darüber hinaus zur Rastfestlegung des Revisionsteils R beziehungsweise des Rückwandteiles 7 in der Geschlossenstellung des Rollladenkastens 1 das Rückwandteil 7 eine weitere Rastausnehmung 46 aufweisen, zur rastenden Zusammenwirkung mit einem über den zugewandten Randbereich des zweiten Bodenteiles 5 hinaus abragenden Rastvorsprung 47 des zweiten Bodenteiles 5.

Auch hier versteht sich, dass das Rückwandteil 4 bei Nutzung desselben als Revisionsteil R nicht mit dem einen oder beiden Kopfteilen 2 verbunden ist.

Darüber hinaus können insbesondere die als Revisionsteil R genutzten Kastenteile, so insbesondere das Rückwandteil 7 oder das Bodenteil 5, im Bereich der den Kopfteilen 2 zugewandten Randabschnitte Dichtungen beispielsweise in Form von Lippen- oder Bürstendichtungen aufweisen, um gegebenenfalls sich einstellende Spalte zwischen dem beweglichen Teil und dem Kopfstück 2 in der Kasten-Verschlussstellung zu schließen.

Eine solche Dichtung kann darüber hinaus auch bei einem allein mechanisch bleibend mit dem Kopfstück 2 verbindbaren Teil, so weiter beispielsweise bei dem Bodenteil 4, zur Anwendung kommen.

**Liste der Bezugszeichen**

| | | | |
|---|---|---|---|
| 1 | Rollladenkasten | 36 | Rasteinzelteil |
| 2 | Kopfteil | 37 | Hintergriffabschnitt |
| 3 | Deckenteil | 38 | Rastvorsprung |
| 4 | Bodenteil | 39 | Rastausnehmung |
| 5 | Bodenteil | 40 | Rastausnehmung |
| 6 | Vorderwandteil | 41 | Rastvorsprung |
| 7 | Rückwandteil | 42 | Ausnehmung |
| 8 | Vorrichtung | 43 | Ausnehmung |
| 9 | Breitseitenwandung | 44 | Rastvorsprung |
| 10 | Steg | 45 | Rastausnehmung |
| 11 | Kammer | 46 | Rastausnehmung |
| 12 | Rastvorsprung | 47 | Rastvorsprung |
| 13 | Rastausnehmung | | |
| 14 | Innenseite | c | Tiefenerstreckung |
| 15 | Aufnahme | d | Höhenerstreckung |
| 16 | Leitteil | h | Breite |
| 17 | Außenfläche | r | Verlagerungsrichtung |
| 18 | Kopfteilwandung | s | Vibrationsrichtung |
| 19 | Steckvorsprung | u | Basislinie |
| 20 | Stirnfläche | v | Übermaß |
| 21 | Stirnfläche | | |
| 22 | Aufnahme | A | Gebäudeaußenseite |
| 23 | Boden | B | Gebäudeinnenseite |
| 24 | Seitenwandung | L | Längserstreckung |
| 25 | Stirnwand | L' | Längserstreckung |
| 26 | Stirnwand | R | Revisionsteil |
| 27 | Halterungsteil | | |
| 28 | Halterungsteil | | |
| 29 | Schweißbacke | | |
| 30 | Übermaßvorsprung | | |
| 31 | Bodenbereich | | |
| 32 | Rückwandbereich | | |
| 33 | Rastteil | | |
| 34 | Steg | | |
| 35 | Durchgangsöffnung | | |

## Patentansprüche

1. Zusammengesetzter Rollladenkasten (1), mit zwei Kopfteilen (2), einem Deckenteil (3), einem oder mehreren Bodenteilen (4, 5), einem Vorderwandteil (6) und einem Rückwandteil (7), wobei das Kopfteil (2) mit einer zugeordneten Stirnfläche (21) des Deckenteils (3), des Vorderwandteils (6) sowie vorzugsweise des einen oder der mehrere Bodenteilen (4, 5) und / oder des Rückwandteils (7) verschweißbar ist, **dadurch gekennzeichnet, dass** an beiden Kopfteilen an einer kopfteilseitigen Stirnfläche im Wesentlichen umlaufend Übermaßvorsprünge (30) vorgesehen sind, die im Zuge eines Schweißvorganges eine homogene Schweißnaht erreichen lassen.

2. Rollladenkasten nach Anspruch 1, **dadurch gekennzeichnet, dass** im verschweißten Zustand das Kopfteil (2) mit den weiteren Teilen (3, 4, 5, 6, 7) ultraschallverschweißt ist.

3. Rollladenkasten nach einem der Ansprüche 1 oder 2, **dadurch gekennzeichnet, dass** im verschweißten Zustand die weiteren Teile (3, 4, 5, 6, 7) mit dem Kopfstück (2) ungeachtet der Verschweißung auch steckverbunden sind.

4. Rollladenkasten nach einem der vorhergehenden Ansprüche, **dadurch gekennzeichnet, dass** im verschweißten Zustand im Falle einer Revisionsöffnung unten das Kopfteil (2) auch mit dem Rückwandteil (7) verschweißt ist und dass im Falle einer Revisionsöffnung hinten das Kopfteil (2) nicht mit dem Rückwandteil (7) verschweißt ist.

5. Verfahren zur Herstellung eines Rollladenkastens (1) mit homogenen Schweißnähten, wobei der Rollladenkasten (1) zwei Kopfteile (2), ein Deckenteil (3), ein oder mehrere Bodenteile (4, 5), ein Vorderwandteil (6) und ein Rückwandteil (7) aufweist, wobei weiter das Deckenteil (3), das Vorderwandteil (6), sowie vorzugsweise ein oder mehrere Bodenteile (4, 5) und / oder das Rückwandteil (7) mit den Kopfteilen (2) schweißverbunden werden, mit Ausnahme eines Revisionsteils (R), gegebenenfalls des als Revisionsteil (R) ausgebildeten Rückwandteils (7) oder Bodenteils (5), **dadurch gekennzeichnet, dass** das Kopfteil (2) mit einer zugeordneten Stirnfläche (21) des Deckenteils (3), des Vorderwandteils (6) sowie vorzugsweise des einen oder der mehreren Bodenteile (4, 5) und/oder des Rückwandteils (7) verschweißt wird, dass auf einer kopfteilseitigen Stirnfläche (20) beider Kopfteile (2) ausgebildete Übermaßvorsprünge (30) im Zuge des Schweißvorgangs schmelzen, wie auch die hierauf anliegenden gegenüberliegenden Bereiche der Stirnflächen (21) der Breitseitenwandungen (9) der weiteren Teile, und dass hierdurch, ausgehend von einem im vormontierten Zustand bei einer in einer Längserstreckung (L) des Rollladenkastens (1) gegebenen Betrachtung bei einem gegenüber einem gewünschten Längserstreckungsmaß gegebenen Übermaß, aufgrund der vorgesehenen Übermaßvorsprünge (30) das gewünschte Längserstreckungsmaß des Rollladenkastens (1) nach dem Schweißvorgang erreicht wird.

6. Verfahren nach Anspruch 5, **dadurch gekennzeichnet, dass** die Verschweißung der Teile als Ultraschallverschweißung durchgeführt wird.

7. Verfahren nach einem der Ansprüche 5 oder 6, **dadurch gekennzeichnet, dass** die Teile (3, 4, 5, 6, 7) mit dem Kopfteil (2), gegebenenfalls mit Ausnahme des Revisionsteils (R), vor Durchführung der Verschweißung steckverbunden werden.

8. Verfahren nach einem der Ansprüche 5 bis 7, **dadurch gekennzeichnet, dass** nach der Verschweißung der Teile (3, 4, 5, 6, 7) mit dem Kopfteil (2) ein gewünschtes Revisionsteil (R) steckverbunden wird.

9. Verfahren nach einem der Ansprüche 5 bis 8, **dadurch gekennzeichnet, dass** in Abhängigkeit davon, ob eine Revisionsöffnung boden- oder rückwandseitig vorgesehen wird, unterschiedliche Kopfteile (2) vorgesehen werden.

10. Verfahren nach einem der Ansprüche 5 bis 9, **dadurch gekennzeichnet, dass** bei Ausbildung des Rückwandteils (7) als Revisionsteil (R) ein oder mehrere Bodenteile (4, 5) sogleich mit dem Kopfteil (2) schweißverbunden werden.

11. Verfahren nach einem der Ansprüche 5 bis 9, **dadurch gekennzeichnet, dass** bei Ausbildung eines Bodenteils (5) als Revisionsteil (R) ein Bodenbereich (31) in Bezug auf eine Verschweißung eines oder mehrerer Bodenteile (4, 5) vollständig ausgenommen wird.

12. Verfahren nach Anspruch 11, **dadurch gekennzeichnet, dass** bei Ausbildung eines Bodenteils (5) als Revisionsteil (R) nach dem Verschweißen und Einsetzen eines Rollladenpanzers in den Rollladenkasten (1) ein erstes Bodenteil (4) mit dem Kopfteil (2) mechanisch bleibend verbunden wird und ein zweites Bodenteil (5) als Revisionsteil (R) an das erste Bodenteil (4) anscharniert wird.

13. Vorrichtung (8) zur Herstellung eines Rollladenkastens (1) nach einem Ansprüche 1-4, kennzeichnet, dass zur Ausbildung einer Schweißverbindung zwischen den Kopfteilen (2) und weiteren Teilen (3, 4, 5, 6, 7) in der Vorrichtung (8) ein, bezogen auf einen eingesetzten Rollladenkasten (1), in Längsrichtung (L) verfahrbares Halterungsteil (28) mit Schweißbacken (29) zur Anlage an einem der Kopfteile (2) ausgebildet ist.

14. Vorrichtung nach Anspruch 13, **dadurch gekennzeichnet, dass** die Vorrichtung (8) eine in Längsrichtung (L') veränderbare dreiseitig geschlossene Aufnahme (22), entsprechend den Außenabmessungen des herzustellenden Rollladenkastens (1), aufweist.

## Claims

1. An assembled roller shutter box (1) with two head parts (2), a ceiling part (3), one or more bottom parts (4, 5), a front wall part (6) and a rear wall part (7), wherein the head part (2) can be welded to an assigned end face (21) of the ceiling part (3), the front wall part (6) and preferably the one or more bottom parts (4, 5) and/or the rear wall part (7), **characterized in that** oversize projections (30) essentially are provided peripherally on both head parts on an end face thereof and make it possible to achieve a homogeneous welding seam in the course of a welding process.

2. The roller shutter box according to claim 1, **characterized in that** the head part (2) is in the welded state ultrasonically welded to the other parts (3, 4, 5, 6, 7).

3. The roller shutter box according to one of claims 1 or 2, **characterized in that** the other parts (3, 4, 5, 6, 7) are in the welded state also plugged together with the head piece (2) irrespective of the welded joints.

4. The roller shutter box according to one of the preceding claims, **characterized in that**, in the case of an inspection opening, the bottom side of the head part (2) is in the welded state also welded to the rear wall part (7), and **in that**, in the case of an inspection opening, the rear side of the head part (2) is not welded to the rear wall part (7).

5. A method for producing a roller shutter box (1) with homogeneous welding seams, wherein the roller shutter box (1) has two head parts (2), a ceiling part (3), one or more bottom parts (4, 5), a front wall part (6) and a rear wall part (7), and wherein the ceiling part (3), the front wall part (6) and preferably one or more bottom parts (4, 5) and/or the rear wall part (7) furthermore are welded to the head parts (2) with the exception of an inspection part (R), if applicable an inspection part (R) in the form of the rear wall part (7) or a bottom part (5), **characterized in that** the head part (2) is welded to an assigned end face (21) of the ceiling part (3), the front wall part (6) and preferably the one or more bottom parts (4, 5) and/or the rear wall part (7), **in that** oversize projections (30) formed on an end face (20) of both head parts (2), as well as the abutting opposite regions of the end faces (21) of the broadside walls (9) of the other parts, melt in the course of the welding process, and **in that**, based on an oversize in comparison with a desired longitudinal size of the preassembled roller shutter box (1) in a longitudinal direction (L), the desired longitudinal size of the roller shutter box (1) can thereby be achieved after the welding process due to the provided oversize projections (30).

6. The method according to claim 5, **characterized in that** the parts are welded together by means of ultrasonic welding.

7. The method according to one of claims 5 or 6, **characterized in that** the parts (3, 4, 5, 6, 7) are plugged together with the head part (2), if applicable with the exception of the inspection part (R), prior to carrying out the welding process.

8. The method according to one of claims 5 to 7, **characterized in that** a desired inspection part (R) is plug-connected after the parts (3, 4, 5, 6, 7) have been welded to the head part (2).

9. The method according to one of claims 5 to 8, **characterized in that** different head parts (2) are provided depending on whether an inspection opening is provided on the bottom side or on the rear wall side.

10. The method according to one of claims 5 to 9, **characterized in that** one or more bottom parts (4, 5) are directly welded to the head part (2) if the inspection part (R) is formed by the rear wall part (7) .

11. The method according to one of claims 5 to 9, **characterized in that** a bottom region (31) is completely exempt from a welding process of one or more bottom parts (4, 5) if the inspection part (R) is formed by a bottom part (5).

12. The method according to claim 11, **characterized in that**, if the inspection part (R) is formed by a bottom part (5), a first bottom part (4) is mechanically connected to the head part (2) in a permanent manner and an inspection part (R) in the form of a second bottom part (5) is hinged to the first bottom part (4) after the welding process and the insertion of a roller shutter into the roller shutter box (1).

13. A device (8) for producing a roller shutter box (1) according to one of claims 1-4, **characterized in that** a holding part (28), which with respect to an inserted roller shutter box (1) can be displaced in the longitudinal direction (L) and has welding jaws (29) for abutting on one of the head parts (2), is formed in the device (8) in order to produce a welded joint between the head parts (2) and the other parts (3, 4, 5, 6, 7).

14. The device according to claim 13, **characterized in that** the device (8) has a receptacle (22), which is variable in the longitudinal direction (L') and closed on three sides, wherein said receptacle corresponds to the external dimensions of the roller shutter box (1) to be produced.

## Revendications

1. Caisson de volet roulant (1) assemblé, avec deux pièces de tête (2), une pièce de plafond (3), une ou plusieurs pièces de fond (4, 5), une pièce de paroi avant (6) et une pièce de paroi arrière (7), dans lequel la pièce de tête (2) peut être soudée à une face frontale (21) associée de la pièce de plafond (3), de la pièce de paroi avant (6) ainsi que, de préférence, d'une ou de plusieurs pièces de fond (4, 5) et/ou de la pièce de paroi arrière (7), **caractérisé en ce que** des saillies de surdimensionnement (30) sont prévues sur sensiblement tout le pourtour des deux pièces de tête sur une face frontale côté pièce de tête, qui permettent d'obtenir un cordon de soudure homogène au cours d'une opération de soudage.

2. Caisson de volet roulant selon la revendication 1, **caractérisé en ce que**, à l'état soudé, la pièce de tête (2) est soudée par ultrasons avec les autres pièces (3, 4, 5, 6, 7).

3. Caisson de volet roulant selon l'une des revendications 1 ou 2, **caractérisé en ce que**, à l'état soudé, les autres pièces (3, 4, 5, 6, 7) sont également assemblées par emboîtement avec la pièce de tête (2), nonobstant le soudage.

4. Caisson de volet roulant selon l'une des revendications précédentes, **caractérisé en ce qu'**à l'état soudé, dans le cas d'une ouverture de révision en bas, la pièce de tête (2) est également soudée à la pièce de paroi arrière (7) et **en ce que** dans le cas d'une ouverture de révision à l'arrière, la pièce de tête (2) n'est pas soudée à la pièce de paroi arrière (7).

5. Procédé de fabrication d'un caisson de volet roulant (1) avec des soudures homogènes, dans lequel le caisson de volet roulant (1) présente deux pièces de tête (2), une pièce de plafond (3), une ou plusieurs pièces de fond (4, 5), une pièce de paroi avant (6) et une pièce de paroi arrière (7), dans lequel en outre la pièce de plafond (3), la pièce de paroi avant (6), ainsi que, de préférence, une ou plusieurs pièces de fond (4, 5) et/ou la pièce de paroi arrière (7) sont assemblées par soudage avec les pièces de tête (2), à l'exception d'une pièce de révision (R), le cas échéant de la pièce de paroi arrière (7) ou de la pièce de fond (5) réalisée sous forme de pièce de révision (R), **caractérisé en ce que** la pièce de tête (2) est soudée à une face frontale (21) associée de la pièce de plafond (3), de la pièce de paroi avant (6) ainsi que, de préférence, d'une ou de plusieurs pièces de fond (4, 5) et/ou de la pièce de paroi arrière (7), **en ce que** des saillies de surdimensionnement (30) formées sur une face frontale (20) des deux pièces de tête (2) côté pièce de tête fondent au cours de l'opération de soudage, de même que les zones opposées des faces frontales (21) des parois larges (9) des autres pièces qui s'y appliquent et **en ce que**, de ce fait, en partant d'un surdimensionnement donné à l'état prémonté pour une observation selon une extension longitudinale (L) du caisson de volet roulant (1) par rapport à une dimension d'extension longitudinale souhaitée, la dimension d'extension longitudinale souhaitée du caisson de volet roulant (1) est atteinte après l'opération de soudage en raison des saillies de surdimensionnement (30) prévues.

6. Procédé selon la revendication 5, **caractérisé en ce que** le soudage des pièces est réalisé sous forme de soudage par ultrasons.

7. Procédé selon l'une des revendications 5 ou 6, **caractérisé en ce que** les pièces (3, 4, 5, 6, 7) sont assemblées par emboîtement avec la pièce de tête (2), éventuellement à l'exception de la pièce de révision (R), avant la réalisation du soudage.

8. Procédé selon l'une des revendications 5 à 7, **caractérisé en ce que**, après le soudage des pièces (3, 4, 5, 6, 7) avec la pièce de tête (2), une pièce de révision (R) souhaitée est assemblée par emboîtement.

9. Procédé selon l'une des revendications 5 à 8, **caractérisé en ce que** l'on prévoit des pièces de tête (2) différentes selon qu'une ouverture de révision est prévue du côté du fond ou du côté de la paroi arrière.

10. Procédé selon l'une des revendications 5 à 9, **caractérisé en ce que**, lorsque la pièce de paroi arrière (7) est réalisée sous forme de pièce de révision (R), une ou plusieurs pièces de fond (4, 5) sont immédiatement assemblées par soudage à la pièce de tête (2).

11. Procédé selon l'une des revendications 5 à 9, **caractérisé en ce que**, lorsqu'une pièce de fond (5) est réalisée sous forme de pièce de révision (R), une zone de fond (31) est complètement exclue pour ce qui concerne un soudage d'une ou plusieurs pièces de fond (4, 5).

12. Procédé selon la revendication 11, **caractérisé en ce que**, lorsqu'une pièce de fond (5) est réalisée sous forme de pièce de révision (R), après le soudage et l'insertion d'un tablier de volet roulant dans le caisson de volet roulant (1), une première pièce de fond (4) est reliée mécaniquement de manière permanente à la pièce de tête (2) et une deuxième pièce de fond (5) est montée de manière articulée à la première pièce de fond (4) en tant que pièce de révision (R).

13. Dispositif (8) de fabrication d'un caisson de volet roulant (1) selon l'une des revendications 1 à 4, **caractérisé en ce que**, pour réaliser une liaison soudée entre les pièces de tête (2) et d'autres pièces (3, 4, 5, 6, 7), il est formé dans le dispositif (8) une pièce de maintien (28) mobile dans la direction longitudinale (L) par rapport à un caisson de volet roulant (1) inséré, et comportant des mâchoires de soudage (29) destinées à venir en appui contre l'une des parties de tête (2).

14. Dispositif selon la revendication 13, **caractérisé en ce que** le dispositif (8) présente un logement de réception (22) fermé sur trois côtés, modifiable dans la direction longitudinale (L'), correspondant aux dimensions extérieures du caisson de volet roulant (1) à fabriquer.
